# EUROPEAN PATENT APPLICATION

(11) **EP 1 085 555 A1**
(43) Date of publication of application: **21.03.2001**
(21) Application number: 00402367.7
(22) Date of filing: 28.08.2000
(51) Int. Cl.: H01J 17/49, H01J 9/227

(54) **Composition for black matrix, formation of black matrix and display device provided with black matrix**

(30) Priority: 01.09.1999 FR 9910961
(71) Applicant: THOMSON PLASMA S.A.S., 92100 Boulogne-Billancourt (FR)
(72) Inventor: Baret, Guy, 92648 Boulogne Cedex (FR); Moi, Agide, 92648 Boulogne Cedex (FR); Alberto, Gérard, 92648 Boulogne Cedex (FR)
(74) Representative: Kohrs, Martin

(57) **Abstract**

The composition for a black matrix, which does not include a mineral binding and/or sintering agent, preferably contains a pigment chosen from: i) an iron chromium aluminium mixed oxide, ii) an iron chromium nickel cobalt mixed oxide and iii) an iron chromium cobalt aluminium mixed oxide or a mixture of iron, chromium, cobalt and aluminium oxides. The invention also relates to a plasma display panel comprising a first tile (2) and a second tile (4) facing each other, enclosing a discharge space, and an array of discharge cells at the intersection of electrodes covered with a dielectric layer (6, 8, 12, 14), at least one of the tiles having a black matrix (30) embedded beneath a dielectric layer (6), the black matrix (30) consisting of an opaque material, at least part of which is incorporated into the said dielectric layer (6).

## Description

The present invention relates to image display screens which incorporate a black matrix intended to improve the contrast and the rendition of these images. Black matrices are used both in flat screens and in cathode-ray tubes. The invention provides a novel compound for forming such a black matrix, which can be used especially in plasma display panels (PDPs).

In general, each image displayed on a PDP consists of a set of light discharge points. The light discharges occur in a gas contained between two insulating tiles, namely a front tile and a rear tile. Each discharge point is generated in a discharge cell defined by the intersection of electrodes grouped in arrays, each electrode array being supported by at least one of the tiles.

Thus a PDP has a two-dimensional matrix of cells, organized in rows and in columns, according to the geometry of the electrode arrays.

In PDPs, the emission of visible light, needed for an image to be seen by an observer, is obtained by the excitation of phosphors by ultraviolet radiation. The phosphor layers, usually deposited on the rear tile, consist of particles having a mean diameter of a few microns and therefore strongly scatter the incident light, that is to say the external light illuminating the panel. This phenomenon causes two types of constraints.

Firstly, in order to have the maximum contrast in the PDP, it is necessary to reduce as much as possible the coefficient of scattered reflection. This coefficient corresponds to the ratio of the intensity of the light reflected by the panel to the intensity of the incident light. However, it is recommended to reduce this coefficient without excessively reducing the luminance emitted by the screen. Since the surface of the panel is not uniformly emissive, a known means of reducing this coefficient consists in blackening the less emissive regions of the panel and thus in forming a "black matrix". Part of the surface of the panel therefore appears black or dark to an observer, whereas the luminance of the panel is only slightly reduced.

Secondly, in colour display panels, in order to obtain the maximum colour purity, it is recommended to form a screen against the light emitted in the inter-pixel regions. This is because, in these panels, each dot or pixel consists of three cells for the primary colours: red, green and blue. The light discharge in a cell produces ultraviolet light which illuminates the phosphor of a single primary colour which coats the walls of this cell, which phosphor in turn emits this single primary colour. However, this light discharge also illuminates inter-cell regions often having phosphors of various primary colours, which inter-cell regions in turn emit several primary colours; these "parasitic" emissions vary depending on many technological factors and are there not controllable. They degrade the colorimetric purity. The presence of a "black matrix" in the inter-pixel regions allows this degradation to be limited.

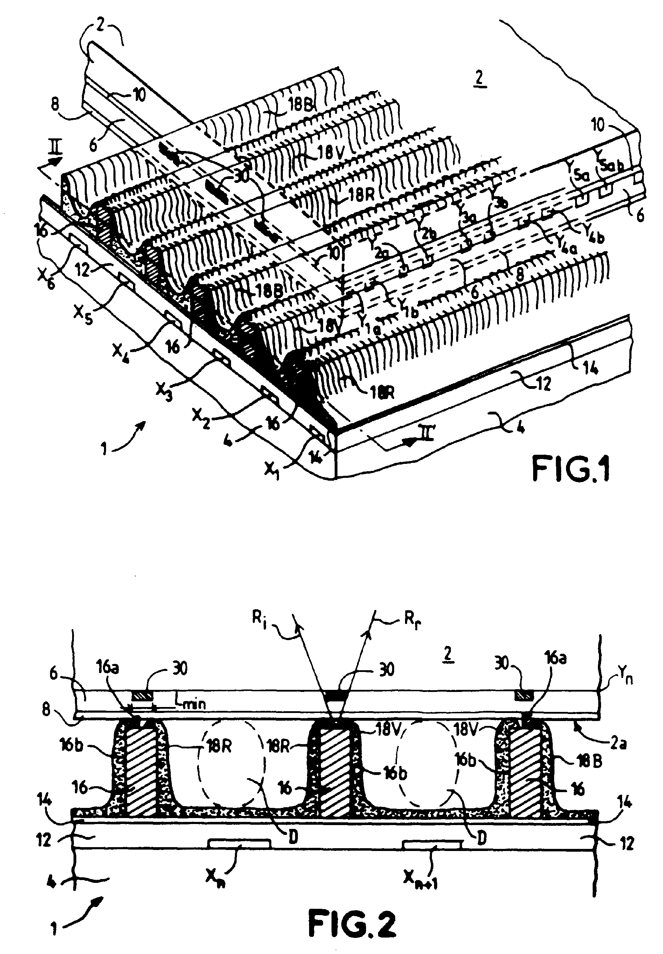

In order to understand these phenomena better, the structure of a conventional PDP provided with a "black matrix" will now be described with reference to Figures 1 and 2. The PDP in question is of the AC type with surface discharge and separation of the various primary colours by barriers.

The PDP comprises a first glass tile 2 and a second glass tile 4 a few millimetres in thickness, these being placed and joined together, face to face, with a gap of the order of 100 microns between their internal faces (Figure 1).

The first tile 2 - which constitutes the front face of the PDP - has, on its internal surface, an array of parallel electrodes grouped in pairs of close electrodes Y₁ₐ-Y_{1b}, Y₂ₐ-Y_{2b},...,Y₅ₐ-Y_{5b}, etc. Each pair of row electrodes constitutes a display line of the PDP. The electrodes are embedded in a thick layer 6 of dielectric material, for example glass, which coves the entire working area of the tile 2. This layer 6 is itself covered with a thin protective layer 8 (the thickness is less than 1 micron) of another dielectric material, in this case magnesium oxide (MgO), the surface of which is exposed to the discharge gas.

In the example, the internal surface of the first tile 2 is provided with a black matrix 30 which is covered by the dielectric layers 6 and 8 (Figure 2) and will be explained in detail below.

The second tile 4 - which therefore constitutes the rear face of the PDP - has, on its internal face, an array of uniformly spaced parallel electrodes X₁, X₂,...,X₆, which are perpendicular to the row electrodes Y₁ₐ-Y_{1b}, Y₂ₐ-Y_{2b},...,Y₅ₐ-Y_{5b}, etc., which constitute the array of address electrodes of the plasma display panel.

As in the case of the first tile 2, these electrodes X₁, X₂,...,X₆ are embedded in a thick layer 12 of dielectric which is itself covered with a thin protective layer 14 of magnesium oxide.

A discharge cell of the PDP is thus formed at each intersection between an address electrode X₁, X₂,...,X₆ and a pair of row electrodes Y₁ₐ-Y_{1b}, Y₂ₐ-Y_{2b},...,Y₅ₐ-Y_{5b}, etc. of a display line.

In operation, an AC voltage, called sustain voltage, is applied between the electrodes forming the pair of electrodes of each display line. The discharges occur on the surface between these electrodes, depending on a voltage signal applied to the address electrode, using well-established multiplexing techniques.

In particular, it is possible to modify the state of the luminous discharge D (Figure 2) of each cell by a line-by-line scan in order to produce a display in video mode.

Straight barriers 16 are placed on the thin layer 14 of the second tile 4 between the address electrodes X₁, X₂,...,X₆ and parallel to the latter. These barriers 16 have side walls perpendicular to the surface of the tile 4 and a flat top which may possibly serve as a bearing surface for the internal face of the first tile 2. These barriers 16 thus compartmentalize the discharge cells which are located on different address electrodes.

Typically, the barriers 16 have a height of the order of 100 microns and a width of the order of 50 microns and are placed so as to be mutually parallel with a pitch of 220 microns.

Stripes of phosphors 18R, 18G, 18B are placed, between the barriers, on the exposed surface of the second tile 4, more specifically on the thin layer 14 of magnesium oxide. Thus, each stripe of a primary colour, 18R in the case of red, 18G in the case of green and 18B in the case of blue, is bordered by two adjacent barriers 16. Each stripe also covers the side wall of these barriers 16. The phosphors are thus deposited in a repeat pattern of three successive stripes each having a different emission colour, so as to create a succession of elementary colour triads in the direction of the row electrodes X₁, X₂,...,X₆.

The two tiles 2 and 4 are sealed together and the space that they enclose is filled with a discharge gas at a low pressure after vacuum-pumping through a pumping tube.

It will be noted that the presence of the layers 6, 8, 12 and 14 of dielectric material on top of the electrodes Y₁ₐ-Y_{1b}, Y₂ₐ-Y_{2b},...,Y₅ₐ-Y_{5b}, etc. and X₁, X₂,...,X₆ is characteristic of AC PDPs. The dielectric material together with its electrode forms a capacitor across which the voltages needed to generate and sustain the light discharges in the gas are applied.

One specific feature of AC PDPs is that the AC sustain voltage automatically sets the state of a light discharge dot D based on its last command received; either the discharge is sustained or it remains absent, depending on the command previously transmitted. This thus results in an inherent image memory effect, hence the possibility of addressing the dots only when their light state has to change.

The barriers 16 play an important role and determine to a large part the electrooptic characteristics of PDPs, especially with regard to surface-discharge PDPs. This is because they have several separate functions which have a direct impact on the image quality:
- they serve as a support for a relatively large part of the phosphor 18 deposited; in this regard, their side walls at right angles to the base of the substrate 2, which are also covered with phosphor, make it possible to obtain a very wide viewing angle; and
- since they are opaque, intrinsically or as a result of the phosphor coating, they allow the primary colours to be well separated.

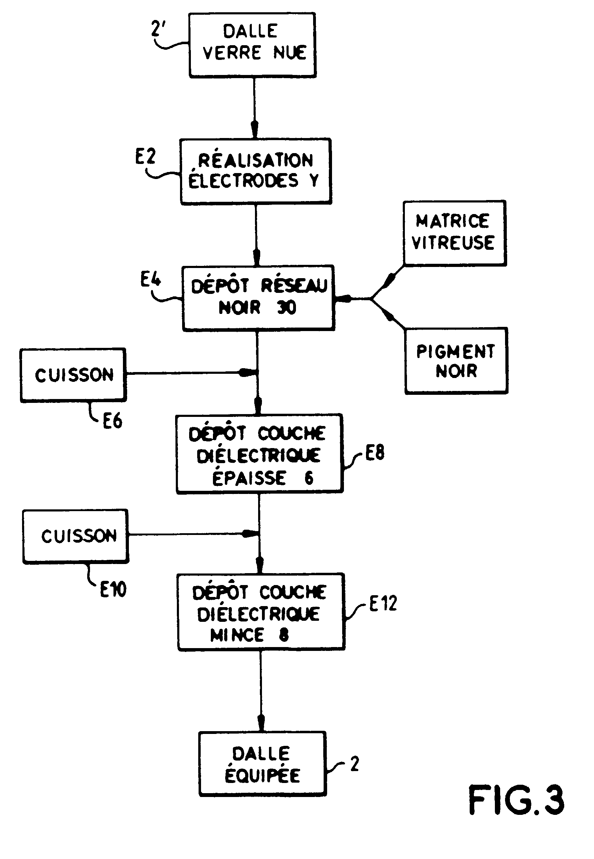

In order to block the parasitic emissions which arise from traces of phosphors deposited on the tops 16a of the barriers and which degrade the colorimetric purity, a black matrix 30 is deposited on the tile 2 and positioned opposite these tops, i.e. on the front tile, as indicated in Figure 2. Put another way, stripes of material opaque to visible light are formed - normally on the internal face 2a of the aforementioned tile - directly opposite the tops 16a so that an observer looking at the front tile 2 of the panel cannot perceive directly the light emitted by the tops 16a. The main phases in the production of the front tile 2 provided with a black matrix 30 according to a conventional process will now be described with reference to the flow chart in Figure 3.

The process starts with a bare glass tile 2' intended to form the front panel 2 of the PDP. The array of electrodes is deposited (step E2) on this tile in the configuration suitable for this tile. In the example in question, these are row electrodes Y₁ₐ-Y_{1b}, Y₂ₐ-Y_{2b},...,Y₅ₐ-Y_{5b}, etc. The electrodes may be produced by successive layers of conductors, for example as an ITO (indium tin oxide)/chromium-copper-chromium stack or simply a chromium-copper-chromium sequence. A firing step (not shown) may optionally be provided specifically to set these layers.

Next, the black matrix 30 is produced (step E4). This step consists in depositing, on the glass tile 2' provided with its electrodes Y₁ₐ-Y_{1b}, Y₂ₐ-Y_{2b},...,Y₅ₐ-Y_{5b}, etc., a layer of a black dielectric in the pattern required for the matrix. Thus, in the case of the PDP example in Figures 1 and 2, the pattern of the black matrix consists of parallel stripes aligned with respect to the tops 16a of the barriers on the opposite tile.

The black dielectric forms a discontinuous layer of enamel, which is generally composed of pigment particles bound by a glassy matrix (for example, lead borosilicate). The glassy matrix is a mineral substance which serves as sintering and/or binding agent during the firing to vitrify the enamel. The pigment is a mineral substance which, after firing, is sufficiently opaque to visible radiation. It is generally a black pigment. The black matrix 30 is formed before the thick dielectric layer 6 (which is transparent in the front layer) is deposited.

In general, the dielectric forming the black matrix 30 is fired (step E6) before the transparent dielectric 6 is deposited (step E8) so that there is no mixing (interdiffusion) between the black dielectric of the matrix 30 and the transparent dielectric layer 6. After the transparent dielectric layer has been deposited, it is then fired (step E10). Finally, the thin layer 8 of MgO is deposited (step E12) before the equipped and finished tile 2 is obtained.

It may therefore be seen that it is necessary to pass via a firing step E6 especially for producing the black matrix 30, thereby increasing the production costs.

Moreover, the black dielectric made of pigmented enamel has a high optical index, of about 2. Since the refractive index of the glass of the tile is appreciably lower than that of this enamel, there is therefore a change in optical index at the interface between the glass of the tile and the black dielectric 30 which causes a large specular reflection of the incident light. Thus, even if the black matrix 30 is completely absorbent with respect to visible radiation, between 5% and 10% of the incident light illuminating this black matrix would be reflected solely because of the high index of the black dielectric.

Given these problems, the present invention provides, according to a first aspect, a composition for a black matrix, especially intended for the production of a plasma display panel, characterized in that it does not include a glassy matrix nor a mineral sintering and/or binding agent.

Advantageously, this composition is in the form of a paste comprising a mixture of at least one pigment and of an organic resin; the nature and the proportions of the resin in the mixture are adapted, in a manner known per se, for allowing this paste to be deposited properly on the tile of the display panel.

The at least one pigment is a mineral product which is opaque to visible light, at least after firing. Preferably, it is a material which is opaque to visible light before firing, which remains temperature-stable up to approximately 600°C, i.e. under any of the conditions for firing the dielectric material usually employed for the manufacture of a plasma display panel.

This pigment is advantageously in the form of particles having a mean size of between 0.1 and 10 microns, and preferably between 0.13 and 5 microns, a typical value being 1.5 microns.

This pigment is preferably chosen from the group comprising: i) an iron chromium aluminium mixed oxide or a mixture of iron, chromium and aluminium oxides, ii) an iron chromium nickel cobalt mixed oxide or a mixture of iron, chromium, nickel and cobalt oxides and iii) an iron chromium cobalt aluminium mixed oxide or a mixture of iron, chromium, cobalt and aluminium oxides.

According to a second aspect, the present invention relates to a plasma display panel characterized in that it comprises a black matrix produced from a composition as described above.

This is especially a plasma display panel comprising a first tile and a second tile facing each other, enclosing a discharge space, and an array of discharge cells at the intersections of electrodes grouped in arrays, each array of electrodes being covered with at least one dielectric and/or protective layer, at least one of the tiles having a black matrix embedded beneath a dielectric or protective layer; according to the invention, the black matrix consists of an opaque material, at least part of which is incorporated into the said dielectric and/or protective layer.

According to a third aspect, the present invention relates to a process for manufacturing a display device, especially a plasma display panel, having a black matrix on a substrate, the process comprising the steps of:
a) producing a substantially opaque layer on the substrate, the said layer being in a pattern corresponding to the black matrix;
b) depositing a dielectric material on the substrate so as to cover the black matrix; and
c) firing the dielectric material.

This process passes from step a) to step b) without an intermediate step of firing the substantially opaque material intended to form the black matrix.

Preferably, before the firing step, the layer making up the black matrix does not include a glassy matrix nor a mineral agent capable of sintering and/or binding during the firing of the dielectric.

Thus, although the "black matrix" is applied according to the invention without a sintering and/or binding mineral agent or a glassy matrix for binding the particles of the black pigment, after the dielectric and/or protective layer which covers this matrix is fired, the pigment particles of the black matrix are partially "wetted" by the glassy phase of the dielectric and/or protective layer. After firing, this partially "wetted" black matrix does indeed form a layer separated from the dielectric layer but it is observed that the enamel of the dielectric layer during the firing has indeed migrated as far as the glass substrate into the intergranular spaces between the pigment particles of the black matrix. Implementation of the process according to the invention makes it possible to avoid a firing step in the manufacture of a tile of a display device and therefore is economically advantageous. By virtue of the only partial wetting of the pigment of the black matrix, the performance of the black matrix is improved, that is to say the specular reflection coefficient is decreased and the colorimetric purity is improved.

The pattern corresponding to the black matrix may be produced by direct screen printing or by photolithography.

If the process is used for manufacturing an AC plasma display panel, it is advantageous to produce the black matrix on the front tile of the panel.

Further features and advantages of the present invention will become more clearly apparent from the description which follows of preferred embodiments of the invention, given purely by way of non-limiting examples, with reference to the appended drawings in which:
- Figure 1, already discussed, is a three-quarter view of a structure of a surface-discharge AC colour plasma display panel;
- Figure 2, already discussed, is a sectional view on the line II-II' in Figure 1;
- Figure 3, already discussed, is a simplified flow chart showing the main steps in the production of a front tile provided with a black matrix according to the prior art;
- Figure 4 is a simplified flow chart showing the main steps in the production of a front tile provided with a black matrix according to the present invention;
- Figures 5a to 5f are sectional views of a front tile of a plasma display panel during various stages in its manufacture up to the point of depositing a black matrix on the latter, Figures 5c, 5e and 5f being transverse views relative to Figures 5a and 5b;
- Figure 6 is a sectional view of the tile in Figure 5 after a thick layer of dielectric has been deposited;
- Figure 7 is a sectional view of the tile in Figure 6 after a thin layer of dielectric has been deposited;
- Figure 8 is a sectional view of an AC plasma display panel having the tile in Figure 7 to which the rear tile is joined; and
- Figure 9 is a view in two planes of a plasma display panel assembled with its fittings, in operation.

The embodiments of the invention will be described within the context of a plasma display panel as described with reference to Figures 1 and 2. These aspects will not be described again for the sake of brevity. Moreover, the description is focused on the front tile 2 of the plasma display panel (PDP) which, in the examples given, carries the black matrix 30. The manufacturing techniques relating to the other aspects of the PDP, especially as regards the rear tile which includes *inter alia* the barriers 16 and the phosphor layers 18R, 18G and 18B, are well known to those skilled in the art and will not be detailed here, again for the sake of brevity.

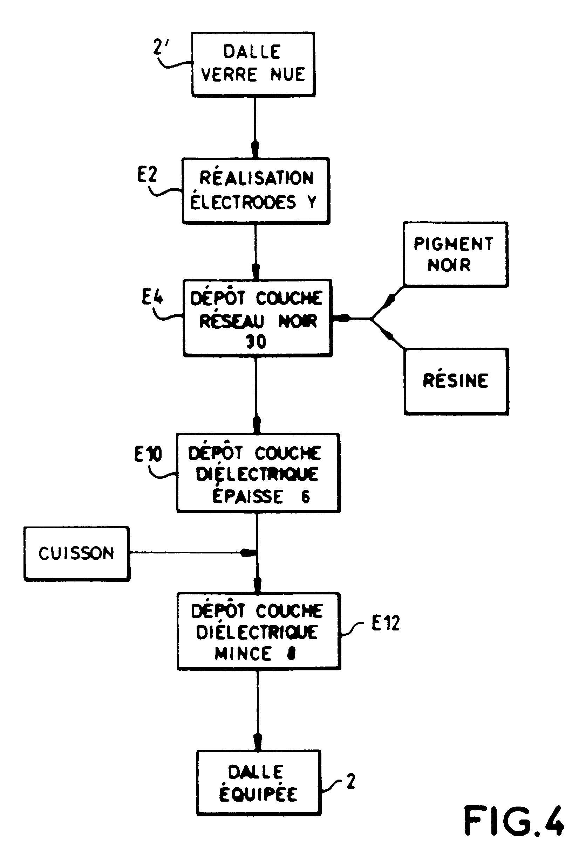

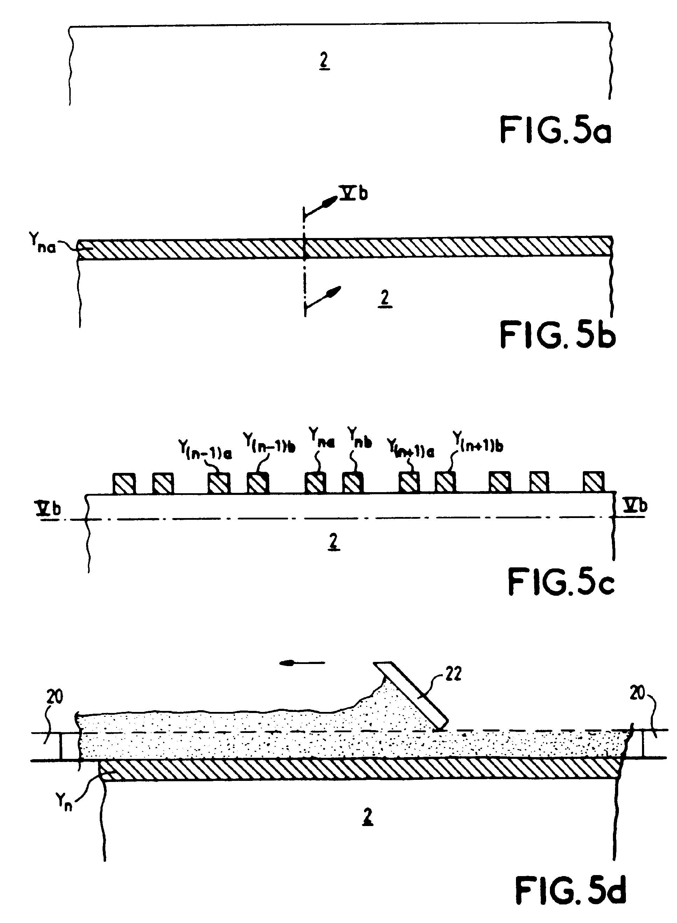

As shown in Figures 4 and 5a, the first step in the manufacture of the front tile 2 bearing the black matrix is applied to a bare glass tile 2' which constitutes the substrate for the layers deposited subsequently. This tile is made of soda-lime glass of optical quality, or close to optical quality. In the case of a PDP of television aspect ratio with a 105 cm diagonal, its thickness is about 3 mm.

Optionally, the bare tile 2' may undergo a heat treatment so as to stabilize its dimensions during the subsequent firing steps. In this case, the tile is heated to a temperature of about 580°C so as to allow the material to compact before the tile is set to the required dimensions. During such a heat treatment, the glass may contract by 400 to 600 ppm.

Next, the array of electrodes Y₁ₐ-Y_{1b}, Y₂ₐ-Y_{2b},...,Y₅ₐ-Y_{5b}, etc. is deposited on the glass (Figures 5b and 5c). With regard to a tile 2 intended to form the front face of the PDP in Figure 1, the array will comprise the electrodes Y₁ₐ-Y_{1b}, Y₂ₐ-Y_{2b},...,Y₅ₐ-Y_{5b}, etc. The electrode array is produced using known techniques by screen printing or photolithography. Each electrode may be composed of one or more successive layers, in order to form a chromium-copper-chromium stack for example, or of a coating of indium tin oxide known by the abbreviation ITO. The electrodes Y₁ₐ-Y_{1b}, Y₂ₐ-Y_{2b},...,Y₅ₐ-Y_{5b}, etc. are thin enough to be considered as being transparent.

Depending on the materials and the techniques used for depositing the electrodes, a firing step may possibly be required (this step is not indicated in Figure 4).

Next, a composition 30' intended to form the black matrix 30 is deposited (step E4, Figure 4) on the tile provided with its electrodes Y₁ₐ-Y_{1b}, Y₂ₐ-Y_{2b},...,Y₅ₐ-Y_{5b}, etc.

This composition 30' is a paste based on a mixture of a black pigment and an organic resin.

This composition 30' does not include a sintering and/or binding mineral agent nor a glassy matrix capable of binding the pigment particles. This is because, as will be described later, it is possible to fire the paste for the black matrix at the same time as the layer of dielectric which embeds the electrodes. Consequently, the pigment particles of the black matrix composition are wetted with the material of the dielectric layer, at least at the interface between this black matrix and this dielectric layer. This phenomenon makes any addition of a sintering and/or binding agent or of a glassy phase to the composition for the black matrix unnecessary, unlike in the conventional technique in which the addition of a binding and/or sintering agent to the black matrix composition seems to be essential. This is because, in the prior art, the black matrix composition is fired separately from the other layers, hence the inevitable presence of a binding and/or sintering agent.

The black pigment is chosen to be stable at the temperatures of the subsequent heat cycles in the process, particularly the cycle of firing the dielectric layers 6 and 8. This firing is carried out in air at a temperature of about 530 to 600°C (a typical value being 580°C) for approximately 30 minutes. The black pigment is preferably a mineral pigment, for example an iron chromium aluminium mixed oxide or an iron chromium nickel cobalt mixed oxide. The mean particle size in the example is from 0.3 to 5 microns, a typical value being 1.5 microns.

The nature of the organic resin depends on the technique used for depositing the layer 30'.

If the deposition is carried out in the required pattern directly on the tile 2, for example by means of a screen-printing mask having apertures corresponding to the pattern, all that is required is that the organic resin be compatible with the rest of the process: deposition and firing of the thick dielectric 6 and deposition or oxidation of the resin during this firing. In this case, the resin may be composed of an organic binder and a solvent. The binder may, for example, be based on cellulose (ethyl cellulose or methyl cellulose) or on a vinyl compound. The binder is in solution in a solvent, such as a glycol compound (for example, an ethylene glycol) or terpineol. Additives such as antifoams, plasticizers, dispersants and surfactants may be added to the black matrix composition so as to improve the behaviour of the resin.

In the example in Figure 5, the pattern for depositing the material 30' making up the black matrix 30 is produced by photolithography. In this case, the resin must also be photosensitive. This effect can be obtained by using a resin containing a polyvinyl alcohol dissolved in water and a photosensitizer, such as a diazo compound or a dichromate. As previously, it is also possible to add additives such as antifoams, plasticizers, dispersants and surfactants in order to improve the behaviour or the rheology of the resin.

As shown in Figure 5d, the material 30' making up the matrix is firstly deposited evenly over the entire tile by means of a screen-printing mask 20 having an aperture corresponding to the aspect ratio of the working area of the tile. The layer 30' is made uniformly thick with the aid of a doctor blade 22 using a technique known per se.

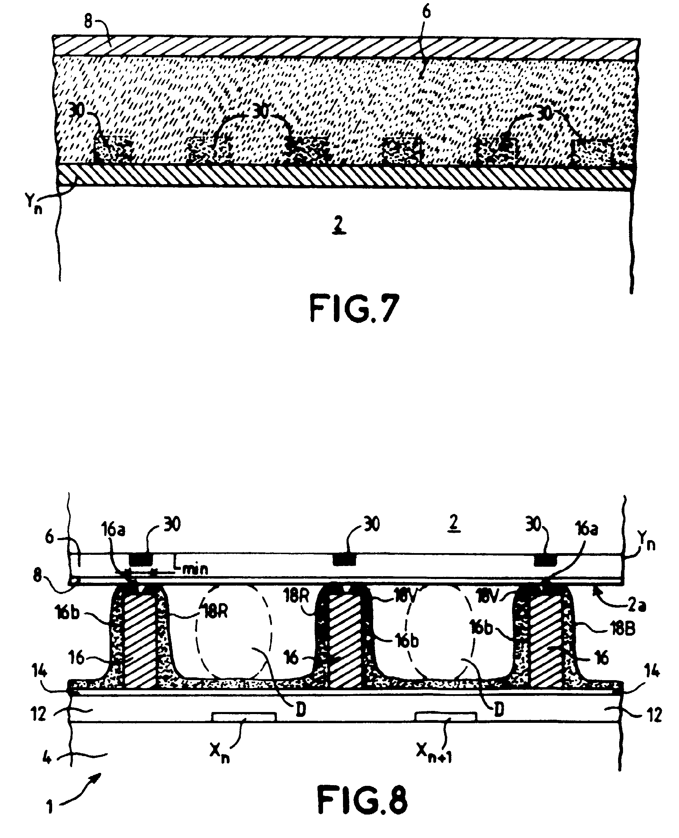

Next, a photolithography mask 24 is placed on the layer thus formed (Figure 5e). Since the resin used in the example is a resin of negative photosensitization, those parts of the surface of the layer which are exposed by the mask 24 will consequently form the black matrix 30. Thus, the mask 24 has a pattern of elongate apertures 24a which have the width Lma and the pitch required for the matrix (cf. Figure 8).

It will be noted that the width Lma of the dark stripes forming the black matrix is less than the width of the tops 16a of the barriers opposite them. This difference in width results from the tolerances on the alignment of the front and rear tiles 2 and 4 and because of the fact that it is undesirable for a portion of the matrix to be plumb with a portion of the rear substrate outside the barriers 16.

The mask 24 is exposed to ultraviolet light so as to sensitize the portions thus exposed.

It should be pointed out that, in the example, the pattern of the black matrix 30 crosses the row electrodes Y₁ₐ-Y_{1b}, Y₂ₐ-Y_{2b},...,Y₅ₐ-Y_{5b}, etc. on the substrate 2, as shown in Figure 5f.

After an exposure time, the mask 24 is removed and the layer 30' is developed using techniques known per se so as to remove from the tile all the parts not irradiated by the ultraviolet light (Figure 5f). It will be understood that an equivalent result can be obtained using a resin of positive photosensitization and a photolithography mask in the inverse pattern.

The black matrix 30 thus formed is in the form of a set of uniformly spaced parallel black stripes. The geometry of the black matrix 30 is indexed to that of the tops 16a of the barriers 16, each black stripe being plumb with the top of a corresponding barrier. This is because, as explained above, one of the functions of the black matrix 30 is to absorb the parasitic radiation emitted by traces of phosphor lying on or near the tops.

It will be noted that, in the example shown, the barriers 16 have a height equal to the separation between the facing internal faces of the two tiles 2 and 4 so that there is no free space left above the tops 16a when these two substrates are joined together. According to the present invention, the layers of dielectric are then produced without an intermediate step of firing the layer of black matrix 30' thus deposited (step E10, Figure 4).

This process starts by depositing the thick dielectric layer 6. This dielectric is typically a clear mineral glass, for example a lead borosilicate glass. It is prepared in the form of a glass frit in suspension in an organic binder in order to allow it to be deposited in the liquid phase. This deposition is carried out using various techniques such as screen-printing deposition, spin-on deposition, etc., with a typical thickness of 25 microns (fired thickness), this being sufficient to entirely embed the electrodes Y₁ₐ-Y_{1b}, Y₂ₐ-Y_{2b},..., Y₅ₐ-Y_{5b}, etc. deposited on the substrate 2 (Figure 5d).

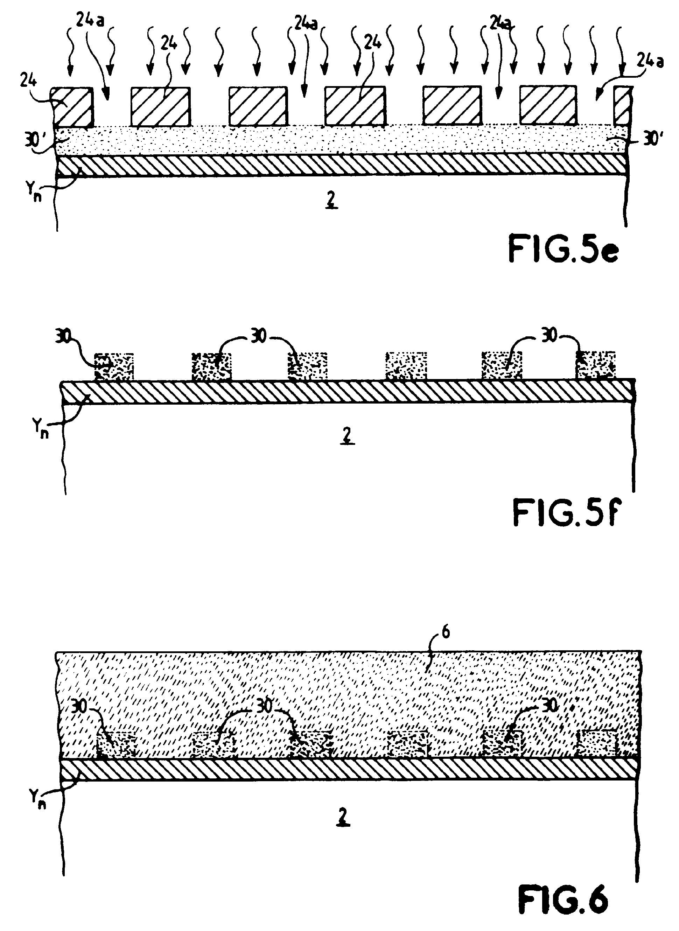

Next, the thick layer 6 is fired at a temperature which corresponds to the melting point of the material making up this layer (Figure 6). In the case of the glass as described, this firing takes place at a temperature of about 580°C for approximately 30 minutes. It will be noted that this firing is sufficient to degrade the resin contained in the black matrix and to set the material making up the black matrix 30.

Finally, the thin dielectric layer 8 of magnesia (MgO) is deposited. This layer is deposited by vacuum deposition, gun evaporation or sputtering (Figure 7). The typical thickness of the MgO layer 8 is of the order of 1 micron.

The present invention allows many alternative embodiments, two examples of which will be given below by way of indication.

### Example 1

The starting point is a front tile 2 already provided with its array of electrodes Y₁ₐ-Y_{1b}, Y₂ₐ-Y_{2b},...,Y₅ₐ-Y_{5b}, etc. This electrode array is composed of metal lines forming a sequence of thin chromium-copper-chromium layers. The black matrix 30 is then deposited on the electrode array.

To do this, a resin containing 4% ethyl cellulose in propylene glycol is prepared. A black pigment based on an iron aluminium chromium oxide having a mean diameter of 2 microns is added to this resin. The proportions are such that the final viscosity of the paste is 50 Pa.s (pascal.second).

The black matrix is then deposited by screen printing through a 325-mesh screen bearing the pattern and the layer deposited is dried at 120°C for 20 minutes.

The thick layer of dielectric 6 is then deposited and the whole assembly is fired at a high temperature compatible with the dielectric.

### Example 2

This example begins with a front tile 2 already provided with its electrode array. This electrode array is composed of transparent electrodes Y₁ₐ-Y_{1b}, Y₂ₐ-Y_{2b},...,Y₅ₐ-Y_{5b},... made of ITO (indium tin oxide) which are coupled to metal lines, called bus lines, obtained by photolithography from a layer of photosensitive silver paste and fired at 550°C for approximately 10 minutes.

The black matrix 30 is deposited on this electrode array.

A resin containing 10% 14/135 grade polyvinyl alcohol in water is prepared. Added to this solution are 3% of a 100 g/l sodium dichromate solution which serves as photosensitizer of the polyvinyl alcohol.

A paste is then prepared by adding a black pigment based on iron nickel chromium cobalt oxide having a mean diameter of 1.5 microns. The proportions are such that the final viscosity is 500 mPa.s (millipascal.second).

A uniform layer is then deposited on the working area of the tile 2 by screen printing through a 325-mesh screen and dried at 80°C for 3 minutes. Next, this layer is exposed to ultraviolet light (800 mJ/cm² of 365 nm wavelength light) through a mask bearing the pattern (the resin in this case being of the negative type - the pattern is clear on the mask, like that of the mask 24 shown in Figure 5e). Finally, this exposed layer is developed in water and dried at 100°C for 3 minutes.

The dielectric layer is then deposited in a conventional manner and the whole assembly is fired at a high temperature compatible with the dielectric.

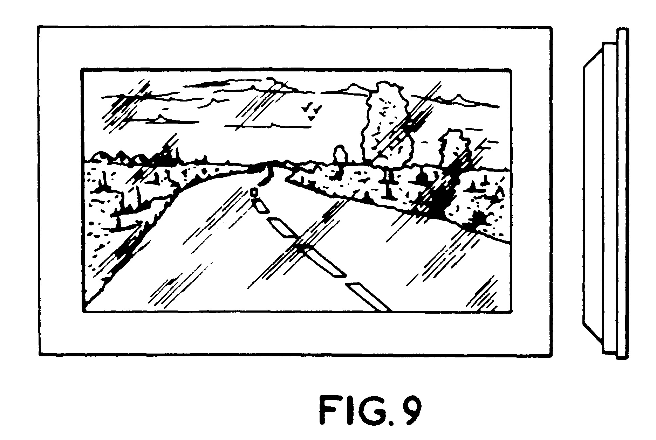

Figure 9 shows the plasma display panel in operation when it is assembled and provided with external fittings. As may be clearly seen, the part forming the screen is very thin relative to its area and completely flat.

The examples are based on an example of a surface-discharge AC PDP. However, it is clear that the invention can also be employed with any type of PDP, such as PDPs whose technology may be the following:
- AC discharge current of the surface-discharge type or of the matrix-discharge type, in which the light discharges are produced from one tile to the other between crossed electrodes on their respective internal faces;
- DC current, in which the discharge is produced between electrodes having the same polarity over time;
- full colour, that is to say based on at least three elementary colours, either of restricted colour range or monochromatic.

Moreover, the invention is in no way limited to PDPs and applies to any display device (liquid-crystal displays, cathode-ray tubes, etc.) employing a black matrix and for which it is advantageous to produce the latter by using processes not requiring very high temperatures.

## Claims

1. Composition for a black matrix, especially intended for the production of a plasma display panel, characterized in that it does not include a glassy matrix nor a binding and/or sintering mineral agent.

2. Composition according to Claim 1, characterized in that it comprises at least one mineral pigment and an organic resin.

3. Composition according to Claim 2, characterized in that the said pigment is chosen from the group comprising:
i) an iron chromium aluminium mixed oxide or a mixture of iron, chromium and aluminium oxides;
ii) an iron chromium nickel cobalt mixed oxide or a mixture of iron, chromium, nickel and cobalt oxides;
iii) an iron chromium cobalt aluminium mixed oxide or a mixture of iron, chromium, cobalt and aluminium oxides.

4. Composition according to any one of Claims 1 to 3, characterized in that the pigment is a material which is temperature-stable up to 600°C.

5. Composition according to any one of Claims 1 to 4, characterized in that the pigment is in the form of particles having a mean size of between 0.1 and 10 µm and preferably between 0.3 and 5 µm.

6. Composition according to Claim 4, characterized in that the particles have a mean size equal to approximately 1.5 µm.

7. Plasma display panel (1) characterized in that it comprises a black matrix produced from a composition according to any one of Claims 1 to 6.

8. Plasma display panel according to Claim 7, comprising a first tile (2) and a second tile (4) facing each other, enclosing a discharge space, and an array of discharge cells at the intersections of electrodes grouped in arrays, each array of electrodes (X₁, X₂, X₃...,Y₁ₐ-Y_{1b}, Y₂ₐ-Y_{2b},..., Y₅ₐ-Y_{5b}, etc.) being covered with at least one dielectric and/or protective layer (6, 8, 12, 14), at least one of the tiles having a black matrix (30) embedded beneath a dielectric (6) and/or protective layer, characterized in that the black matrix (30) consists of an opaque material, at least part of which is incorporated into the said dielectric (6) and/or protective layer.

9. Process for manufacturing a display device, especially a plasma display panel (1) having a black matrix (30) on a substrate (2), the process comprising the steps of:
a) producing a substantially opaque layer (30') on the substrate (2), the said layer being in a pattern corresponding to the black matrix (30);
b) depositing a dielectric material (6) on the substrate so as to cover the black matrix; and
c) firing the dielectric material;
characterized in that this process passes from step a) to step b) without an intermediate step of firing the substantially opaque material (30') intended to form the black matrix (30).

10. Process according to Claim 9, characterized in that the layer (30') making up the black matrix does not include a glassy matrix nor an mineral agent which binds and/or sinters during the firing.

11. Process according to Claim 9 or 10, characterized in that the pattern corresponding to the black matrix (30) is produced by direct screen printing.

12. Process according to Claim 9 or 10, characterized in that the pattern corresponding to the black matrix (30) is produced by photolithography.

13. Implementation of the process according to any one of Claims 9 to 12 for the manufacture of an AC plasma display panel (1).

14. Implementation of the process according to any one of Claims 9 to 12 for the production of a black matrix (30) on the front tile (2) of an AC plasma display panel (1).
